# EUROPÄISCHE PATENTANMELDUNG

(11) **EP 1 186 676 A2**
(43) Veröffentlichungstag der Anmeldung: **13.03.2002**
(21) Anmeldenummer: 01118324.1
(22) Anmeldetag: 27.07.2001
(51) Int. Cl.: C21C 1/02, C21C 7/064

(54) **Verfahren und Vorrichtung zur Behandlung, insbesondere Entschwefelung und/oder Entphosphorung, von Metallschmelzen, insbesondere Roheisen**

(30) Priorität: 12.09.2000 AT 15442000
(71) Anmelder: Voest-Alpine Industrieanlagenbau GmbH & Co., 4020 Linz (AT)
(72) Erfinder: Pirker, Hermann, Dipl.-Ing., 4221 Steyregg (AT); Pirker, Stefan, Dipl.-Ing., 4040 Linz (AT)
(74) Vertreter: VA TECH Patente GmbH & Co

(57) **Zusammenfassung**

Die Erfindung betrifft eine Vorrichtung und ein Verfahren zur Behandlung, insbesondere Entschwefelung und/oder Entphosphorung von Metallschmelzen, insbesondere Roheisen, mit einem ersten und einem zweiten Reaktanden, wobei der erste Reaktand die zu behandelnde flüssige Metallschmelze, insbesondere das zu entschwefelnde flüssige Roheisen, enthält, und der zweite Reaktand ein flüssiges Behandlungsmittel, insbesondere ein Entschwefelungsmittel und/oder ein Entphosphorungsmittel, besonders bevorzugt eine synthetische Schlacke, enthält, oder umgekehrt. Dabei werden die beiden Reaktanden zeitlich überlappend in ein Reaktionsgefäß (1) geleitet, und - während die Reaktanden in das Reaktionsgefäß (1) geleitet werden - unter Verwendung eines Mittel zum Dispergieren (5) innig miteinander vermischt.

## Beschreibung

Die Erfindung betrifft eine Vorrichtung und ein Verfahren zur Behandlung, insbesondere zur Entschwefelung und/oder Entphosphorung, von Metallschmelzen, insbesondere von Roheisen, mit einem ersten und einem zweiten Reaktanden, wobei der erste Reaktand die zu behandelnde Metallschmelze, insbesondere das zu entschwefelnde flüssige Roheisen, und der zweite Reaktand ein flüssiges Behandlungsmittel, insbesondere ein Entschwefelungsmittel und/oder ein Entphosphorungsmittel, besonders bevorzugt eine synthetische Schlacke, enthält, oder umgekehrt.

Schwefel sollte im Roheisen wegen seiner, ausführlich dokumentierten, schädlichen Wirkung auf das Werkstoffverhalten nur in geringer Menge enthalten sein. Neben der Verwendung schwefelarmen Eisenerzes und geringer Kokssätze, bzw. schwefelarmen Kokses, ist insbesondere die Entschwefelung des Roheisens von großer Bedeutung. Dabei sind dem Fachmann verschiedene Möglichkeiten bekannt, das Roheisen mit geeigneten Zusätzen zu behandeln.

Im Stand der Technik sind im wesentlichen zwei Verfahren zur Roheisenentschwefelung gebräuchlich: Einerseits das Einblasen von Entschwefelungsmitteln in eine, zwischen Roheisenerzeugung und Stahlwerk positionierte, Torpedo- oder Rohrpfanne oder in eine Chargierpfanne des Stahlwerkes. Andererseits das sogenannte Rührverfahren, bei welchem Entschwefelungsmittel mechanisch in der Chargierpfanne verrührt wird.

In EP-B-0627012 ist ein Roheisenentschwefelungsverfahren geoffenbart, wobei die Entschwefelung in einem Niederschachtofen oder einer Roheisenchargierpfanne durchgeführt wird. Dabei erfordert die Roheisenentschwefelung selbst, wie auch die Schlackenregeneration einen hohen Zeitaufwand, wie er nur durch mehrere parallel arbeitende Öfen bewältigbar ist. Es entsteht dabei ein entsprechend hoher Aufwand an Investions- und Betriebsmittel, wobei besonders hohe Anforderungen an die Logistik des Betreibers gestellt werden.

Unter dem Gesichtspunkt des Standes der Technik ist es eine Aufgabe der vorliegenden Erfindung, ein Verfahren nach dem Oberbegriff des Anspruches 1 und eine Vorrichtung nach dem Oberbegriff des Anspruches 13 weiter zu entwickeln, mit welchem gegenüber dem Stand der Technik eine verbesserte, insbesondere wirtschaftlichere, Prozessführung, erreicht wird.

Die gestellte Aufgabe wird erfindungsgemäß entsprechend dem Verfahren nach dem kennzeichnenden Teil des Anspruchs 1, und entsprechend der Vorrichtung nach dem kennzeichenden Teil des Anspruchs 13 gelöst.

Nach einer beovorzugten Ausführung ist die Erfindung ist durch ein erfindungsgemäßes Verfahren zur Entschwefelung von Roheisen gekennzeichnet, mit einem ersten und einem zweiten Reaktanden, wobei der erste Reaktand das zu entschwefelnde flüssige Roheisen, und der zweite Reaktand ein flüssiges Entschwefelungsmittel, insbesondere eine synthetische Schlacke, enthält, oder umgekehrt, und die beiden Reaktanden zeitlich überlappend in ein Reaktionsgefäß geleitet werden, und - während die Reaktanden in das Reaktionsgefäß geleitet werden - unter Verwendung eines Mittel zum Dispergieren innig miteinander vermischt werden.

Ausführungen zur Entschwefelung von Roheisen gelten stellvertretend für andere Verfahren zur Behandlung von Metallschmelzen.

Als Mittel zur Dispergierung kann nach einer bevorzugten Ausführungsform der Erfindung jede dem Fachmann bekannte Einrichtung zum Dispergieren eingesetzt werden.

Bei dem flüssigen Entschwefelungsmittel handelt es sich bevorzugt um eine synthetische Schlacke, wie sie dem Fachmann aus dem Stand der Technik bekannt ist.

Nach dem Stand der Technik, insbesondere EP-B-0627012, wird das Roheisen mit einem großen Volumen an Dauerschlacke behandelt, die beinahe unbeschränkt oft benützt werden kann. Bei diesem Verfahren läuft entweder das Roheisen durch einen Ofen, in welchem sich die flüssige Entschwefelungsschlacke befindet, hindurch, oder das Roheisen wird in ein Gefäß eingeleert, in welchem sich diese Schlacke befindet. In beiden Fällen nimmt die Schlacke den Schwefel beim Einleeren des Roheisens auf. Im zweiten Fall erfolgt in der Pfanne zusätzlich ein Bodenspülen zur Förderung des Ablaufes der Entschwefelung. Schließlich wird die Schlacke für die Behandlung der Folgeschmelzen wieder regeneriert.

Für ein sehr schnelles Entschwefeln des Roheisens bzw. der Schlacke erweisen sich dabei beide Varianten dieses Verfahrens, wegen ihres beschränkten Phasenkontaktes zwischen Roheisen und Schlacke bzw. Schlacke und Regenerationsgas, als nicht vorteilhaft.

Durch die Erzeugung einer innigen Mischung noch vor oder unmittelbar bei Eingießen des flüssigen Entschwefelungsmittels und des flüssigen Roheisens in ein Reaktionsgefäß wird ein optimaler Phasenkontakt zwischen Roheisen und Entschwefelungsmittel erreicht, und werden somit gegenüber dem Stand der Technik bei vergleichbaren Entschwefelungsraten weitaus kürzere Behandlungszeiten verwirklicht. Damit kann die Anzahl parallel arbeitender Roheisenentschwefelungsanlagen mit Schlackenregeneration verringert werden.

Durch das Mittel zum Dispergieren erfolgt eine feine Verteilung zumindest eines Reaktanden in dem jeweils anderen, wodurch die im wesentlichen vom Phasenkontakt bestimmte Entschwefelungrate deutlich schneller erreicht wird, als im Stand der Technik bislang möglich.

Im Gegensatz zur Zugabe bzw. zum Einblasen von festen Entschwefelungsmitteln, beispielsweise von Kalziumkarbid oder Kalk, das nur mit beschränkter Zugaberate eingebracht werden kann, vermischt sich das flüssige Entschwefelungsmittel innig mit dem Roheisen, wodurch bereits bei der Mischung selbst, bzw. kurz danach, die Entschwefelung abgeschlossen ist.

Ein Mittel zum Dispergieren stellt eine Vorrichtung dar, die das jeweilige flüssige Einsatzmittel fein verteilt. Bei diesem Mittel zum Dispergieren handelt es sich beispielsweise um eine Anzahl an Düsen zur Zufuhr eines Inertgases, die vorzugsweise an einer Gießschurre angebracht sind, und bei Betrieb das Roheisen innig mit dem Entschwefelungsmittel vermischen.

Bei dem erfindungsgemäßen Verfahren wird nach einer bevorzugten Ausführungsform an dem Mittel zum Dispergieren eine Emulsion des Metall/Schlacke-Gemisches erzeugt, wodurch ein besonders intensiver Phasenkontakt, der sich günstig auf die Entschwefelungsraten auswirkt, gewährleistet ist. Die Prozessdauer wird dadurch, gegenüber herkömmlichen Verfahren, verkürzt.

Nach einer bevorzugten Ausführungsform der Erfindung werden der erste und der zweite Reaktand zeitlich überlappend an dem Mittel zum Dispergieren dispergiert.

Durch das, im wesentlichen gleichzeitige, Dispergieren und Vermischen des Roheisens und des Entschwefelungsmittels bestehen besonders günstige Voraussetzungen zur Vermischung der Phasen. Die Strömung, die auf diese Weise erzeugt wird, fördert die innige Durchmischung des Roheisens mit dem Entschwefelungsmittel, und die damit herbeigeführte Entschwefelung des heißen Metalles.

Nach einer besonders bevorzugten Ausführungsform wird bei einer zeitlich überlappenden Dispergierung des ersten und zweiten Reaktanden eine besonders vorteilhafte Emulgierung des Entschwefelungsmittel/Roheisen-Gemisches erzeugt.

Nach einem weiteren Merkmal der Erfindung wird der erste Reaktand an das Mittel zum Dispergieren geleitet, und der zweite Reaktand an dem Mittel zum Dispergieren dispergiert, wobei sich der zweite Reaktand in den ersten Reaktanden fein verteilt.

Dabei wird vorzugsweise die kinetische Energie des zweiten Reaktanden genützt um, unter zumindest teilweiser Umsetzung der kinetischen Energie in Oberflächenenergie, eine feine Verteilung in dem ersten Reaktanden zu erzeugen.

Nach einer besonderen Ausführungsform des erfindungsgemäßen Verfahrens wird eine rinnenförmige Vorrichtung, insbesondere eine Gießschurre, als Mittel zum Dispergieren verwendet.

Dabei wird nach einer besonders bevorzugten Ausführungsform des erfindungsgemäßen Verfahrens der erste Reaktand in der rinnenförmigen Vorrichtung in das Reaktionsgefäß geleitet, während zeitlich überlappend der zweite Reaktand in die rinnenförmige Vorrichtung eingegossen wird.

Wird der zweite Reaktand aus einer ausreichenden Höhe bzw. mit einer ausreichenden kinetischen Energie in die rinnenförmige Vorrichtung eingegossen bzw. eingebracht, erfolgt, insbesondere an der rinnenförmigen Vorrichtung, unter zumindest teilweiser Umsetzung der kinetischen Energie in Oberflächenenergie, eine feine Dispergierung des zweiten Reaktanden, insbesondere in einen, vorzugsweise bereits in der rinnenförmigen Vorrichtung befindlichen, ersten Reaktanden.

Nachdem der zweite Reaktand mit dem ersten Reaktanden erfindungsgemäß vermischt wurde, erfolgt nachfolgend eine, entsprechend den unterschiedlichen Dichten der Phasen gekennzeichnete, Phasentrennung. Die Phasentrennung erfolgt, beginnend bei der Leitung des Gemisches zum Reaktionsgefäß, im wesentlichen im Reaktionsgefäß selbst, wobei die Entmischung zu einer niedrigeren Entschwefelungsrate führt. Allerdings wird durch die großen Flüssigkeitsoberflächen, die sich bevorzugt in der rinnenförmigen Vorrichtung, wie auch insbesondere in dem erfindungsgemäßen Reaktionsgefäß ausbilden, ein sehr guter Wärmeübergang zwischen dem Roheisen und dem Entschwefelungsmittel herbeigeführt, welcher sich positiv auf die Entschwefelung des Roheisens auswirkt.

Nach einer zusätzlichen Ausführungsform des erfindungsgemäßen Verfahren wird an dem Mittel zum Dispergieren ein Mittel zur Erwärmung des Roheisens und/oder des Entschwefelungsmittels betrieben.

Nach einem Merkmal des erfindungsgemäßen Verfahren wird das Roheisen in dem Reaktionsgefäß weiter entschwefelt.

Dabei können die besonderen Vorteile der Entschwefelung in einem Behälter, wie aus dem Stand der Technik bekannt, geltend gemacht werden.

Erfindungsgemäß ist die Entschwefelung des Roheisens, wenn das Roheisen das Reaktionsgefäß erreicht, bereits weitgehend abgeschlossen. Abschließend erfolgt, nach einer besonderen Ausführungsform der Erfindung, im Reaktionsgefäß ein asymptotisches Annähern an einen Gleichgewichtswert Lₛ, der dem Verhältnis von Schwefelgehalt des Entschwefelungsmittels zum Schwefelgehalt des Roheisens im Gleichgewicht entspricht.

Im Reaktionsgefäß, das entsprechend ausgeführt und positioniert wird, befindet sich die Schlacke mit großer Kontaktfläche über dem Roheisen, wodurch die ablaufenden Reaktionen, die wesentlich durch die Größe der Grenzfläche zwischen dem Roheisen und der Schlacke bestimmt werden, entsprechend schneller abgeschlossen sind.

Nach einem weiteren Merkmal des erfindungsgemäßen Verfahrens wird das Roheisen im Reaktionsgefäß gerührt, beispielsweise induktiv gerührt, und/oder erwärmt.

Nach einem zusätzlichen Merkmal des erfindungsgemäßen Verfahrens wird das Entschwefelungsmittel und/oder das Roheisen im Reaktionsgefäß, vorzugsweise mit einem Brenner, erwärmt, wobei das Entschwefelungsmittel und/oder das Roheisen, vorzugsweise auf eine Temperatur von zumindest 1400° C, erwärmt wird.

Nach einer Ausführungsform des erfindungsgemäßen Verfahrens wird das Entschwefelungsmittel, gegebenenfalls unter Benutzung der rinnenförmige Vorrichtung, aus dem Reaktionsgefäß in einen Schlackenbehälter gegossen. Dabei wird mit Sensoren bestimmt, ab welchem Zeitpunkt das Reaktionsgefäß schlackefrei ist, worauf der Vorgang beendet wird.

Nach einer weiteren Ausführungsform des erfindungsgemäßen Verfahrens wird das, zumindest teilweise, entschwefelte Roheisen aus dem Reaktionsgefäß in eine Roheisenchargierpfanne gegossen.

Nach einer Ausführungsform des erfindungsgemäßen Verfahrens wird das Entschwefelungsmittel in einem Schlackenbehälter entschwefelt, und danach zur Entschwefelung von Roheisen wiederverwendet.

Dabei wird die Entschwefelung insbesondere durch Einblasen eines oxidierenden Gases durchgeführt. Das Reaktionsgefäß ist so ausgeführt bzw. positioniert, dass sich eine möglichst große Kontaktfläche zwischen dem Reaktionsgas und der flüssigen Schlacke einstellt, bzw. der Reaktionsweg der Gasmoleküle in der Schlacke maximiert wird.

Nach einer bevorzugten Ausführungsform des erfindungsgemäßen Verfahrens kann das Entschwefelungsmittel, insbesondere im Schlackenbehälter, bei Bedarf mit Schlackenzusätzen behandelt werden. Wird beispielsweise mit dem Roheisen etwas Hochofenschlacke eingeschleppt, kann so die Schlackenanalyse wieder genau einzustellt werden.

Das anfallende schwefelhältige Entschwefelungsmittel wird regeneriert, d.h. entschwefelt. Bei Bedarf können Schlackenzusätze beigemengt werden, um die ideale Schlackenzusammensetzung wiederum einzustellen. Während dieser Zeit erfolgt nach einer besonders bevorzugten Ausführungsform der Erfindung ein mäßiges Rühren des Entschwefelungsmittels, beispielsweise über Inertgas, welches über Düsen von unten in den Schlackenbehälter eingeblasen wird.

Die Erfindung ist weiters durch eine erfindungsgemäße Vorrichtung mit einem, vorzugsweise zum Nachentschwefeln bestimmten, Reaktionsgefäß gekennzeichnet, wobei ein Mittel zum Dispergieren eines flüssigen Entschwefelungsmittels und/oder des Roheisens in dem jeweils anderen, und, vorzugsweise dem Mittel zum Dispergieren nachgeordnet, ein Mittel zum Einleiten des Entschwefelungsmittel/Roheisen-Gemisches in das Reaktionsgefäß vorgesehen sind.

Nach einem Merkmal der erfindungsgemäßen Vorrichtung ist als Mittel zum Einleiten und/oder als Mittel zum Dispergieren mindestens eine rinnenförmige Vorrichtung, insbesondere eine Gießschurre, vorgesehen.

Nach einem weiteren Merkmal der erfindungsgemäßen Vorrichtung ist als Mittel zum Einleiten und als Mittel zum Dispergieren eine, insbesondere kippbare und/oder verschiebbare, Gießschurre vorgesehen.

Dabei handelt es sich bei einer besonders bevorzugten Ausführungsform der Erfindung um eine einzige Gießschurre, die sowohl die Funktion des Mittels zum Dispergieren als auch des Mittels zum Einleiten erfüllt.

Nach einem zusätzlichen Merkmal der erfindungsgemäßen Vorrichtung ist ein Schlackenbehälter zur Aufnahme, insbesondere zur Regeneration, des flüssigen Entschwefelungsmittels vorgesehen ist.

Nach einer Ausführungsform der erfindungsgemäßen Vorrichtung ist an dem Schlackenbehälter mindestens ein Mittel zur Zufuhr eines Schlacken-Regenerationsgases, insbesondere mindestens eine Düse, angeordnet.

Nach einer weiteren Ausführungsform der Erfindung ist bei dem Eingießen des Entschwefelungsmittels in das Roheisen, oder umgekehrt, eine Aufteilung des einzugießenden Mediums in mehrere Teilströme vorgesehen. Auf diese Weise kann die innige Vermischung des Roheisens mit dem Entschwefelungsmittel noch verbessert werden.

Die Erfindung ist wie folgt schematisch anhand mehrerer nicht einschränkender Zeichnungen näher erläutert. Es zeigen:
Fig. 1 einen ersten Prozessschritt zur Durchführung des erfindungsgemäßen Verfahrens zur Entschwefelung von Roheisen
Fig. 2 einen zweiten Prozessschritt zur Durchführung des erfindungsgemäßen Verfahrens zur Entschwefelung von Roheisen
Fig. 3 einen dritten Prozessschritt zur Durchführung des erfindungsgemäßen Verfahrens zur Entschwefelung von Roheisen
Fig. 4 einen vierten Prozessschritt zur Durchführung des erfindungsgemäßen Verfahrens zur Entschwefelung von Roheisen
Fig. 5 einen fünften Prozessschritt zur Durchführung des erfindungsgemäßen Verfahrens zur Entschwefelung von Roheisen
Fig. 6 einen sechsten Prozessschritt zur Durchführung des erfindungsgemäßen Verfahrens zur Entschwefelung von Roheisen
Fig. 7 eine erfindungsgemäße Vorrichtung zur Durchführung des erfindungsgemäßen Verfahrens zur Entschwefelung von Roheisen
Fig. 8 ein erfindungsgemäßes Umleeraggreagat
Fig. 9 ein erfindungsgemäßes metallurgisches Gefäß
Fig. 10 einen erfindungsgemäßen Transportwagen

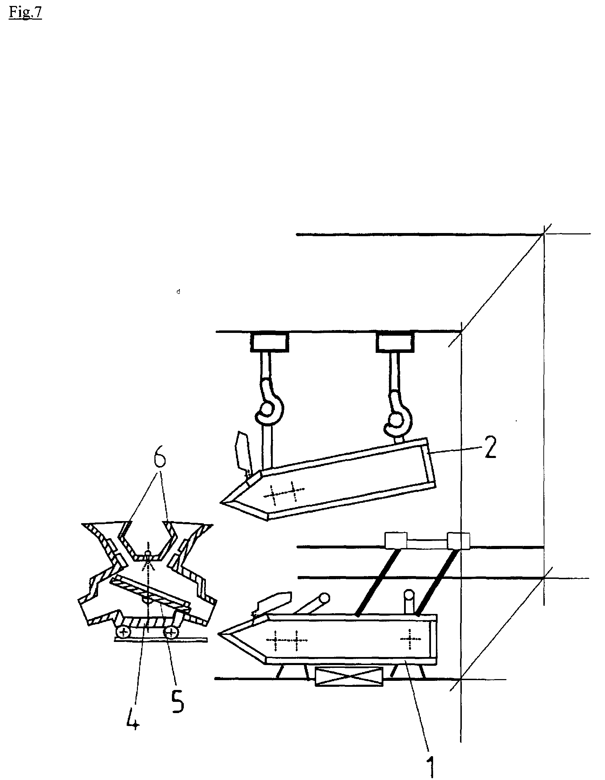

In Fig. 7 ist dabei die prinzipielle Anordnung der erfindungsgemäßen Vorrichtung ersichtlich. Dabei sind ein Reaktionsgefäß 1, ein Schlackenbehälter 2, eine Roheisenchargierpfanne (nicht dargestellt), sowie ein Umleeraggregat 4 vorgesehen. Das Umleeraggregat 4 ist dabei beweglich ausgeführt und weist eine kippbare Gießschurre 5, sowie zwei Gießtrichter 6 auf.

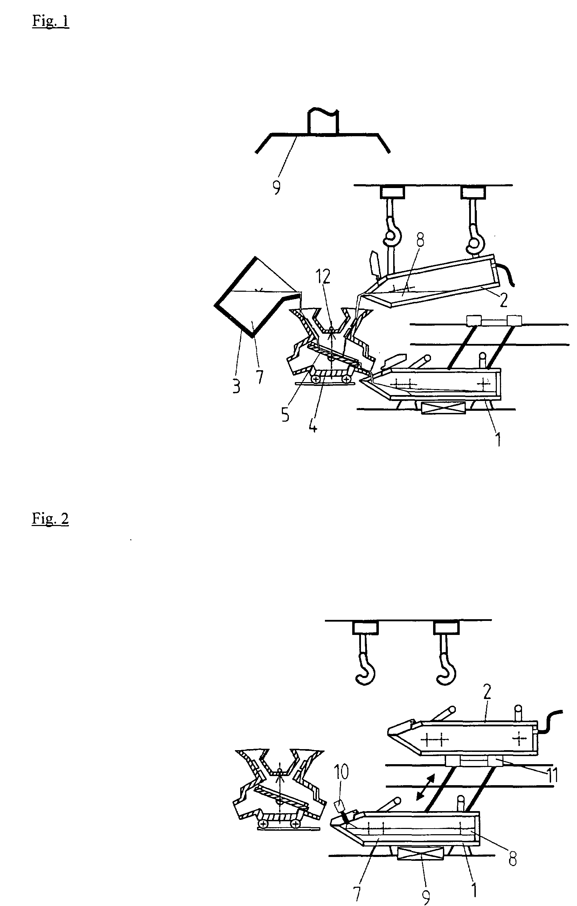

Fig. 1 illustriert den ersten Prozessschritt des erfindungsgemäßen Verfahrens, wobei Roheisen 7 mit hohem Schwefel-Gehalt aus der Roheisenchargierpfanne 3 und flüssige synthetische Schlacke 8 mit niedrigem Schwefel-Gehalt aus einem Schlackenbehälter 2 über ein Umleeraggregat 4, insbesondere eine darin angeordnete kippbare Gießschurre 5, in ein Reaktionsgefäß 1, zur weiteren Entschwefelung des Roheisens, eingeleitet werden. In diesem ersten Prozessschritt findet ein, gegenüber dem Stand der Technik, optimierter Phasenkontakt zwischem einlaufendem Roheisen und flüssiger Schlacke statt. Während des gleichzeitigen Eingießens von Roheisen und Schlacke sind die Brenner 12 des Umleeraggregates 4 in Betrieb, um beide Schmelzen aufzuheizen. Durch die großen Flüssigkeitsoberflächen, insbesondere in der Gießschurre, wird ein sehr guter Wärmeübergang erreicht.

Über der erfindungsgemäßen Vorrichtung ist dabei eine Absaughaube 9, zur Absaugung auftretender Dämpfe, wie sie dem Fachmann aus dem Stand der Technik bekannt ist, angeordnet.

Fig. 2 illustriert den zweiten Prozessschritt des erfindungsgemäßen Verfahrens, wobei in dem Reaktionsgefäß 1, nachdem die Entschwefelung bereits zum überwiegenden Teil abgelaufen ist, ein asymptotisches Annähern an den Gleichgewichtswert Lₛ erfolgt. Lₛ charakterisiert dabei das Verhältnis von Schwefelgehalt der Schlacke [%] zum Schwefelgehalt des Roheisens [%] im Gleichgewicht, und nimmt für die gezielt eingestellte ideale Schlackenzusammensetzung bzw. bei der Roheisentemperatur von über 1400°C einen Wert von, im wesentlichen, 500 an. Im Reaktionsgefäß 1 liegt dabei die Schlacke 8 mit großer Kontaktfläche über dem Roheisen 7, die zu diesem Zeitpunkt den Schwefel aus dem Roheisen beinahe komplett aufgenommen hat. Das Roheisen und damit indirekt auch die Schlacke werden in diesem Prozessschritt induktiv gerührt und aufgeheizt. Dazu ist eine Vorrichtung zum induktiven Heizen und Rühren 9 angebracht.

Zusätzlich wird die Schlacke noch mit einer Brennerheizung 10 beaufschlagt. Die endgültige Temperatur soll dabei über 1400°C liegen.

Während dieser Entschwefelungs- und Heizphase im Reaktionsgefäß 1 wird der jetzt leere Schlackenbehälter 2 neben dem Reaktionsgefäß 1 auf einem Wagen 11 abgesetzt, welcher seitlich verfahrbar ist.

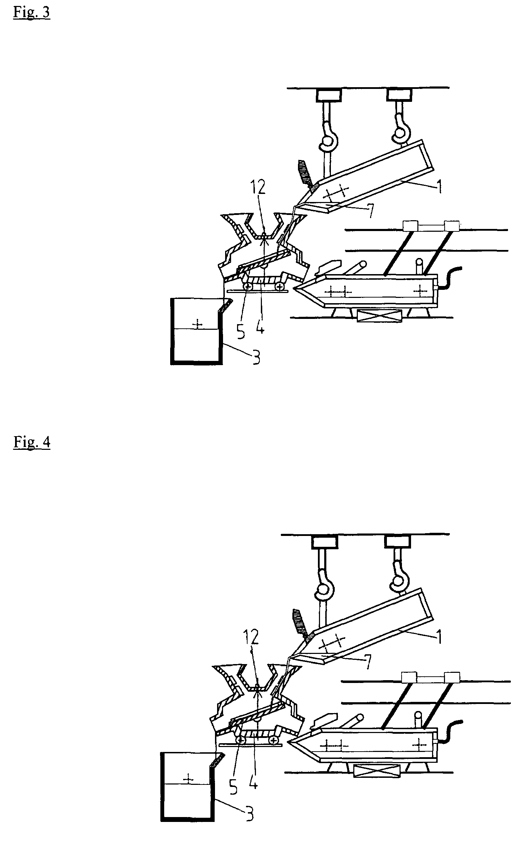

In Fig. 3 ist der dritte Prozessschritt des erfindungsgemäßen Verfahrens dargestellt, wobei nach ausreichender Entschwefelung, bzw. wenn das entschwefelte Roheisen zur weiteren Verwendung, beispielsweise in einem LD-Konverter benötigt wird, das Reaktionsgefäß 1 mit entschwefeltem Roheisen und der schwefelhältigen Schlacke angehoben, und der Schlackenbehälter 2 von der Seite unter das Reaktionsgefäß 1 gefahren und abgesetzt wird. Die schwefelhältige Schlacke 8 wird über das Umleeraggregat 4 in den Schlackenbehälter 2 geleert. Mit Sensoren wird bestimmt, wann das Reaktionsgefäß 1 schlackefrei ist.

Fig. 4 zeigt den vierten Prozessschritt des erfindungsgemäßen Verfahrens, wobei die kippbare Gießschurre 5 im Umleeraggregat 4 umgelegt und das tiefentschwefelte Roheisen 7 in die Roheisenchargierpfanne 3 geleert wird.

Am Umleeraggregat 4 werden zwischendurch eine Anzahl von Brennern 12 betrieben, um die Temperaturverluste beim Umleeren zu minimieren bzw. um Verbärungen zu verhindern.

Das leere Reaktionsgefäß 1 wird vom Kran seitlich abgesetzt.

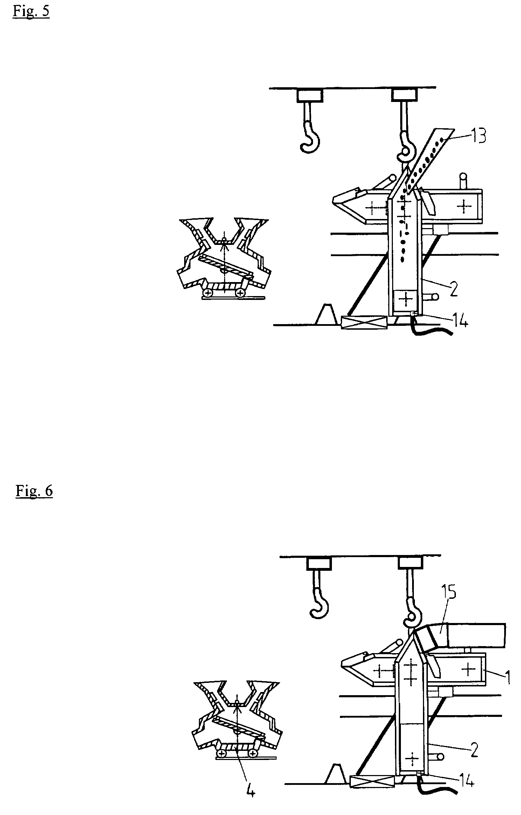

Nach Fig. 5 wird der fünfte Prozessschritt des erfindungsgemäßen Verfahrens dargestellt, wobei bei Bedarf Schlackenzusätze 13 in den vertikal aufgerichteten Schlackenbehälter 2 beigegeben werden, womit die Schlackenzusammensetzung wieder exakt auf den gewünschten Punkt eingestellt werden kann (mit dem Roheisen könnte auch etwas Hochofenschlacke mitgekommen sein, die die ideale Zusammensetzung der synthetischen Schlacke ändern kann). Während dieser Zeit wird die Schlacke von unten über Bodendüsen 14 mit Inertgas gerührt.

Bei der folgenden eigentlichen Schlackenregeneration nach Bild 6 wird ein Absaugrohr 15 an die Gefäßöffnung 11 herangefahren und hermetisch abgedichtet. Gleichzeitig beginnt ein starkes Einblasen von O₂-haltigem Gas durch die, insbesondere ringspaltgeschützten, Bodendüsen 14. Der Effekt ist ein hohes Aufschäumen bzw. Emulgieren, verbunden mit einem sehr intensiven Phasenkontakt Gas/Schlacke. Durch die hohe Schlackenschaumhöhe ist ein sehr langer Reaktionsweg gegeben. Dadurch ist die Wahrscheinlichkeit groß, dass fast jedes O₂-Molekül sein S-Atom trifft und SO₂ bildet, welches dann abgesaugt wird. Es kann davon ausgegangen werden, dass die Regenerationsdauer der Schlacke viel kürzer ist als nach dem Stand der Technik, insbesondere nach EP-B-0627012.

An diesen Prozessschritt schließt sich wieder der erste Prozeßschritt an, wobei der Schlackenbehälter 2 mit der nun entschwefelten synthetischen Schlacke angehoben, das leere Reaktionsgefäß 1 darunter gefahren wird, und schließlich Roheisen und Schlacke wieder gleichzeitig in das Reaktionsgefäß, über das Umleeraggregat 4 geleert werden.

Als Alternative zur induktiven und Gasbeheizung des Systems ist auch denkbar, das Roheisen in dem Roheisenchargierbehälter bereits vor dem Chargieren in das Reaktionsgefäß mit einem einfachen Pfannenofen aufzuheizen, vor allem, wenn generell mit relativ kaltem Roheisen, beispielsweise von einem Hochofen, zu rechnen ist.

Ohne diese Vorwärmung muß über das Roheisen und mittels Gasheizung die Schlacke soweit aufgeheizt werden, dass sie mit Sicherheit nicht einfriert. Bei Verwendung eines Pfannenofens wird die Entschwefelung durch die höhere Temperatur noch begünstigt.

Leistung bzw. Kapazität der Entschwefelungsanlage (Alle Zeitangaben sind ungefähre Angaben und stellen keine Einschränkung des erfindungsgemäßen Verfahrens bzw. der erfindungsgemäßen Vorrichtung dar):
Es ist mit folgenden Detailzeiten des Prozesse zu rechnen:
   - Einleeren von Roheisen und Schlacke in das Reaktionsgefäß 1: 1 min
   - Fertigentschwefeln und Aufheizen im Reaktiongefäß 1: (je nach Heizbedarf bzw. Roheisentemp.) 5-10 min
   - Anheben und Ausleeren der Schlacke aus dem Reaktionsgefäß 1 in den Schlackenbehälter 2: 2 min
   - Ausleeren des Roheisens und Absetzen des leeren Reaktionsgefäßes 1: 2 min
   - Schlackenbehälter 2 aufstellen und Schlacke regenerieren: 5 min
   - Schlackenbehälter 2 umlegen und anheben zur nächsten Behandlung: 2 min
Gesamtzyklus einer Behandlung: 16 bis 21 min
(bei zusätzlicher Anwendung eines Pfannenofens: 16 min)

### Konverterversorgung mit Roheisen:

Bei zwei gleichzeitig arbeitenden LD-Konvertern wird im 20 Min.-Takt entschwefeltes Roheisen benötigt.
Die große Verfügbarkeit der Anlage ist auch dadurch gegeben, dass die Gefäße mit geringem Zeitaufwand gegen neu feuerfest zugestellte oder reparierte Gefäße ausgewechselt werden können.

Folgende weiteren Vorteile werden durch das erfindungsgemäße Verfahren sowie die erfindungsgemäße Vorrichtung erreicht:
- Ein vollständig geschlossener Kreislauf zur Verwendung und Regenerierung eines Entschwefelungsmittels wird eingeführt. Fielen bislang im Stand der Technik der RoheisenEntschwefelung erhebliche Restmengen an Abfällen an, kann durch den Gegenstand der Erfindung eine, im wesentlichen, vollständige Abfallvermeidung verwirklicht werden. Durch den Einsatz und die Regeneration einer Dauerschlacke ist eine gleichbleibende Qualität des Entschwefelungsprozesses gewährleistet.
- Durch das erfindungsgemäße Verfahren sowie durch die erfindungsgemäße Vorrichtung wird eine logistisch besonders ausgereifte und deshalb betriebswirtschaftlich günstige Ausgestaltung eines Verfahrens zur Roheisenentschwefelung eingeführt. Gegenüber dem Stand der Technik steht ein Minimum an metallurgischen Geräten, bei gleichzeitig maximalem Durchsatz an Roheisen, im Einsatz.
- Die spezielle Form des Schlackenbehälters und/oder des Reaktionsgefäßes ist bezüglich seiner Funktion zur Entschwefelung des Roheisens optimiert. Damit wird gegenüber dem Stand der Technik, der diese Roheisenentschwefelung in Transportbehältern, wie Torpedo- oder Chargierpfannen, offenbart, eine deutliche Verkürzung der Verfahrenszeiten bewirkt.

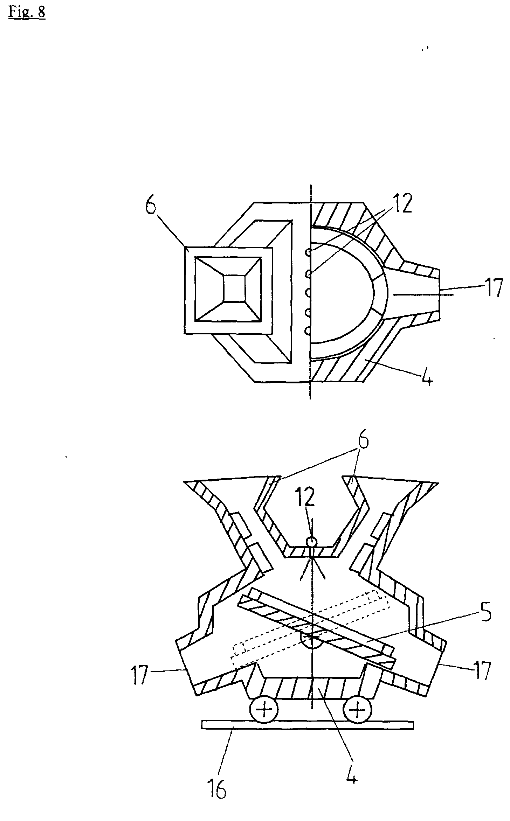

In Fig. 8 ist schematisch eine Ausgestaltung eines Umleeraggregates 4 dargestellt. Wie aus dieser Skizze ersichtlich ist das Umleeraggregat beweglich, beispielsweise auf Schienen 16 verschiebbar, ausgeführt, und weist als zentrales Element mindestens eine Gießschurre 5 auf. Diese Gießschurre 5 ist nach einer weiteren bevorzugten Ausführungsform der Erfindung beweglich, beispielsweise verschiebbar, und/oder kippbar ausgeführt. Besonders bevorzugt weist die Gießschurre zwei Einsatz-Positionen auf, zwischen denen sie durch eine einfache Vorrichtung hin- und hergekippt werden kann. Das Umleeraggregat weist nach einem weiteren Merkmal mindestens einen Eingießtrichter 6 auf, durch welchen das Roheisen und/oder die Schlacke in die Gießschurre eingegeossen werden kann. Nach einer besonders bevorzugten Ausführungsform der Erfindung sind dabei zwei Gießtrichter angeordnet, wobei jeweils ein Trichter zum Eingießen des Roheisen bzw. zum Eingießen der Schlacke dient.

Das Umleeraggregat 4 weist weiters mindestens eine, bevorzugt zwei Ausläufe 17 auf, durch welche das Roheisen und/oder die Schlacke in ein weiteres Gefäß der Hüttentechnik geleert werden.

Nach einer Ausführungsform ist mindestens ein Mittel 12 zum Warmhalten bzw. Erwärmen der Gießschurre und zum Erwärmen des Roheisens und/oder der Schlacke oberhalb der Gießschurre, besonders bevorzugt am Umleeraggregat angeordnet, durch welches insbesondere das Roheisen und/oder die Schlacke während des Eingießens in die Gießschurre und/oder beim Transport in der Gießschurre beheizt werden kann. Das Mittel zum Erwärmen weist beispielsweise einen oder mehrere Brenner auf.

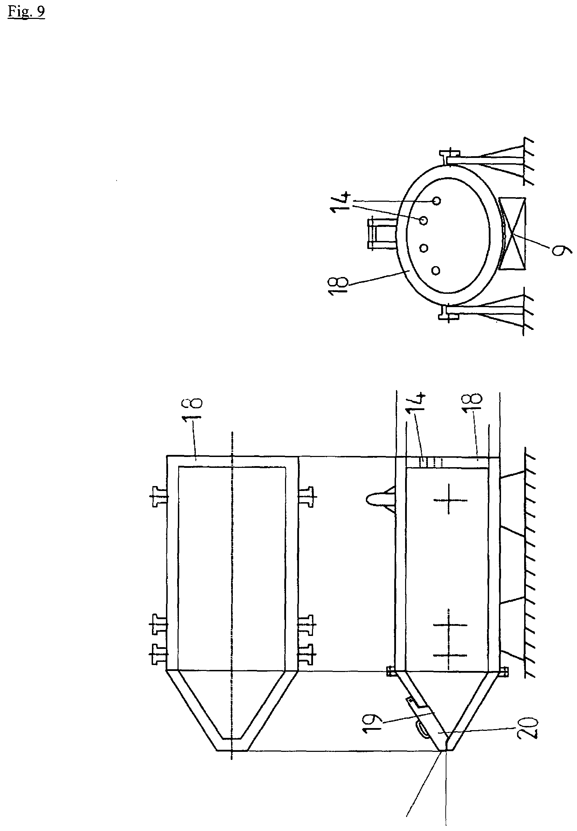

Fig. 9 stellt ein Gefäß 18 zur Verwendung als Reaktionsgefäß 1 bzw. als Schlackenbehälter 2 dar. Das Gefäß weist ein besonders günstiges Verhältnis von Länge zur Breite zur Höhe des Gefäßes auf, wobei einerseits die geometrischen Anforderungen des Hüttenwerkes, andererseits eine optimale Ausnützung der reaktions- und verfahrensspezifischen Eigenschaften gegeben ist. Durch die verhältnismässig große Länge und Breite des Gefäßes ergibt sich bei Eingießen eines Phasengemisches, welches mindestens zwei, in ihrer jeweiligen Dichte unterschiedliche Phasen, aufweist, bei Phasentrennung eine hohe Kontaktfläche der beiden flüssigen Phasen, wodurch Grenzflächen-Reaktionen besonders effizient ablaufen können.

An einer oberen Stirnseite weist das Gefäß 18 eine Öffnung 19, zur Be- und Entladung, an der zweiten Stirnseite eine oder mehrere Düsen 14 zur Zuführung eines Gases auf. Die Düsen können beispielsweise bei einem Reaktionsgefäß 1 entfallen, sind aber bei einem Schlackenbehälter 2 erwünscht, als durch diese Düsen ein Inertgas oder ein Entschwefelungsgas zugeführt werden kann. Die Öffnung des Gefäßes weist einen geeigneten Verschluß 20 auf. Unterhalb des Gefäßes ist nach einer Ausführungsform der Erfindung ein induktiver Rührer 9 angeordnet.

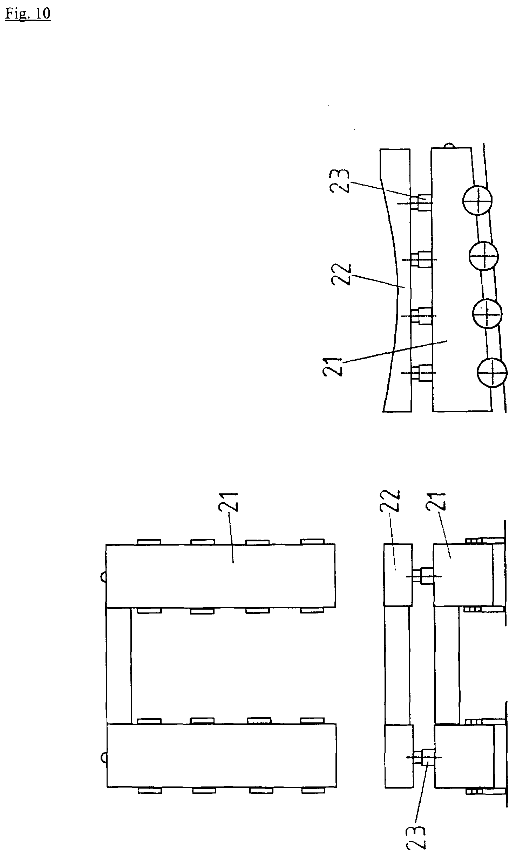

Fig. 10 stellt eine Transportwagen 21 dar, der bevorzugt zur Bewegung von Reaktionsgefäßen 1 und/oder Schlackenbehälter 2 verwendet wird.

Der Transportwagen 21, der vorzugsweise zum Querverfahren der Gefäße dient, weist mindestens einen Hubträger 22 auf, der, insbesondere durch hydraulische Vorrichtungen 23, bewegt wird.

## Patentansprüche

1. Verfahren zur Behandlung, insbesondere zur Entschwefelung und/oder Entphosphorung, von Metallschmelzen, insbesondere von Roheisen, mit einem ersten und einem zweiten Reaktanden, wobei der erste Reaktand die zu behandelnde flüssige Metallschmelze, insbesondere das zu entschwefelnde flüssige Roheisen, enthält, und der zweite Reaktand ein flüssiges Behandlungsmittel, insbesondere ein Entschwefelungsmittel und/oder ein Entphosporungsmittel, besonders bevorzugt eine synthetische Schlacke, enthält, oder umgekehrt, **dadurch gekennzeichnet, dass** die beiden Reaktanden zeitlich überlappend in ein Reaktionsgefäß geleitet werden, und - während die Reaktanden in das Reaktionsgefäß geleitet werden -, vorzugsweise unter Verwendung eines Mittel zum Dispergieren, innig miteinander vermischt werden.

2. Verfahren nach Anspruch 1, **dadurch gekennzeichnet, dass** die Reaktanden an dem Mittel zum Dispergieren in Form einer Emulsion ineinander vermischt werden.

3. Verfahren nach Anspruch 1 oder 2, **dadurch gekennzeichnet, dass** der erste und der zweite Reaktand zeitlich überlappend an dem Mittel zum Dispergieren dispergiert werden.

4. Verfahren nach Anspruch 1 oder 2, **dadurch gekennzeichnet, dass** der erste Reaktand an das Mittel zum Dispergieren geleitet wird, und der zweite Reaktand an dem Mittel zum Dispergieren dispergiert wird, wobei sich der zweite Reaktand in dem ersten Reaktanden fein verteilt.

5. Verfahren nach einem oder mehreren der Ansprüche 1 bis 4, **dadurch gekennzeichnet, dass** eine rinnenförmige Vorrichtung, insbesondere eine Gießschurre, als Mittel zum Dispergieren verwendet wird.

6. Verfahren nach Anspruch 5, **dadurch gekennzeichnet, dass** der erste Reaktand in der rinnenförmigen Vorrichtung in das Reaktionsgefäß geleitet wird, während zeitlich überlappend der zweite Reaktand in die rinnenförmige Vorrichtung eingegossen wird.

7. Verfahren nach einem oder mehreren der Ansprüche 1 bis 6, **dadurch gekennzeichnet, dass** an dem Mittel zum Dispergieren ein Mittel zur Erwärmung der Metallschmelze, insbesondere des Roheisens, und/oder des Behandlungsmittels, insbesondere des Entschwefelungsmittels, betrieben wird.

8. Verfahren nach einem oder mehreren der Ansprüche 1 bis 7, **dadurch gekennzeichnet, dass** die Metallschmelze, insbesondere das Roheisen, in dem Reaktionsgefäß weiter behandelt, insbesondere entschwefelt, wird.

9. Verfahren nach einem oder mehreren der Ansprüche 1 bis 8, **dadurch gekennzeichnet, dass** die Metallschmelze, insbesondere das Roheisen, im Reaktionsgefäß gerührt, beispielsweise induktiv gerührt, und/oder erwärmt wird.

10. Verfahren nach einem oder mehreren der Ansprüche 1 bis 9, **dadurch gekennzeichnet, dass** das Behandlungsmittel, insbesondere das Entschwefelungsmittel, und/oder die Metallschmelze, insbesondere das Roheisen, in dem Reaktionsgefäß, vorzugsweise auf eine Temperatur von zumindest 1400° C, erwärmt wird.

11. Verfahren nach einem oder mehreren der Ansprüche 1 bis 10, **dadurch gekennzeichnet, dass** das Behandlungsmittel, insbesondere das Entschwefelungsmittel, in einem Schlackenbehälter behandelt, insbesondere entschwefelt, und danach zur Behandlung, insbesondere Entschwefelung von Metallschmelzen, insbesondere von Roheisen, wiederverwendet wird.

12. Verfahren nach Anspruch 11, **dadurch gekennzeichnet, dass** das Behandlungsmittel, insbesondere das Entschwefelungmittel, in dem Schlackenbehälter mit Zusätzen, insbesondere Schlackenzusätzen, behandelt wird.

13. Vorrichtung zur Behandlung, insbesondere zur Entschwefelung und/oder Entphosphorung, von Metallschmelzen, insbesondere von Roheisen, mit einem, vorzugsweise zur Nachbehandlung, insbesondere zum Nachentschwefeln, bestimmten, Reaktionsgefäß (1), **dadurch gekennzeichnet, dass** ein Mittel (5) zum Dispergieren eines flüssigen Behandlungsmittels, insbesondere Entschwefelungsmittels und/oder Entphosphorungsmittels, und/oder der Metallschmelze, insbesondere des Roheisens, in dem jeweils anderen, und, vorzugsweise dem Mittel zum Dispergieren nachgeordnet, ein Mittel (5) zum Einleiten des Behandlungsmittel/Metallschmelzen-Gemisches, insbesondere des Entschwefelungsmittel/Roheisen-Gemisches, in das Reaktionsgefäß (1) vorgesehen sind.

14. Vorrichtung nach Anspruch 13, **dadurch gekennzeichnet, dass** als Mittel (5) zum Einleiten und/oder als Mittel (5) zum Dispergieren mindestens eine rinnenförmige Vorrichtung, insbesondere eine Gießschurre, vorgesehen ist.

15. Vorrichtung nach Anspruch 14, **dadurch gekennzeichnet, dass** als Mittel (5) zum Einleiten und als Mittel (5) zum Dispergieren eine, insbesondere kippbare und/oder verschiebbare, Gießschurre vorgesehen ist.

16. Vorrichtung nach einem oder mehreren der Ansprüche 13 bis 15, **dadurch gekennzeichnet, dass** ein Schlackenbehälter (2) zur Aufnahme, insbesondere zur Regeneration, des flüssigen Behandlungsmittels, insbesondere des Entschwefelungsmittels, vorgesehen ist.

17. Vorrichtung nach Anspruch 16, **dadurch gekennzeichnet, dass** an dem Schlackenbehälter (2) mindestens ein Mittel zur Zufuhr eines Schlacken-Regenerationsgases, insbesondere mindestens eine Düse, angeordnet ist.
